# EUROPÄISCHE PATENTSCHRIFT

(11) **EP 2 515 400 B1**
(45) Veröffentlichungstag und Bekanntmachung des Hinweises auf die Patenterteilung: **08.01.2014**
(21) Anmeldenummer: 11163593.4
(22) Anmeldetag: 22.04.2011
(51) Int. Cl.: H02G 3/04, H02G 3/06, H02G 3/32

(54) **Vorrichtung zur Installation von Leitungen**
Device for installing conduits
Dispositif d'installation de conduites

(43) Veröffentlichungstag der Anmeldung: 24.10.2012
(73) Patentinhaber: Zurecon AG, 8003 Zürich (CH)
(72) Erfinder: Pfluger, Gerd, CH-4625, Oberbuchsiten (CH)
(74) Vertreter: Rutz & Partner

(56) Entgegenhaltungen:
- EP-A1- 1 494 328
- EP-A2- 0 355 081
- EP-A2- 2 254 211
- EP-A2- 2 276 131
- FR-A1- 2 723 270

## Beschreibung

Die Erfindung betrifft eine Installationsvorrichtung, die es erlaubt, Leitungen, insbesondere elektrische Kabel, innerhalb eines Gebäudes vorteilhaft zu installieren.

In Gewerbe- Industrie- und Verwaltungsgebäuden werden Kabel, insbesondere Kabel für Stark- und Schwachstromnetze in Kabelkanälen geführt, z.B. von einem Schaltfeld einer Zentrale zu verschiedenen Verbrauchern. Durch Installationsvorrichtungen dieser Art, die z.B. aus [1], EP 1 594 204 B1, bekannt sind, werden die installierten Kabel oder auch Rohrleitungen, die kaum Eigenstabilität aufweisen, gelagert und gegen äussere Einwirkungen geschützt.

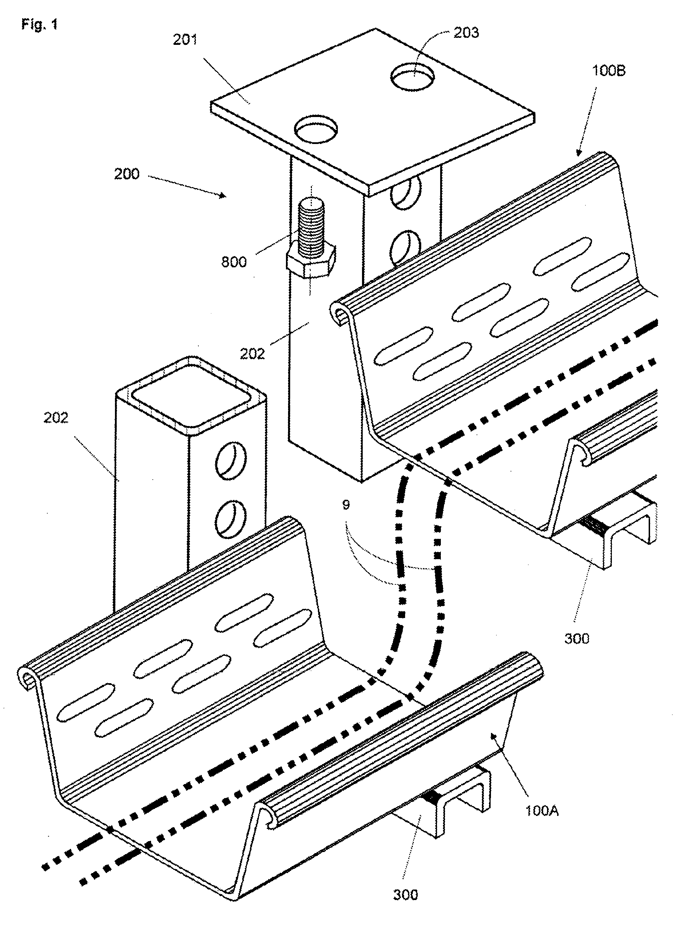

Wie dies in [1] beschrieben und nachstehend in Figur 1 gezeigt ist, umfasst das zur Montage an Decken vorgesehene Trägermaterial solcher Installationsvorrichtungen Deckenstützen 200 mit waagrecht ausgerichteten Auslegern 300. Auf den Auslegern 300 werden Kabelbahnen 100 abgelegt, die der Aufnahme des Kabelmaterials 9 dienen und dazu ein U-Profil aufweisen. Die Deckenstützen 200 weisen ein plattenförmiges Kopfstück 201 auf, das mit einem Rohrteil 202 verbunden ist. Zur Installation der Deckenstützen 200 werden Montageschrauben 800 durch im Kopfstück 201 vorgesehene Öffnungen 203 geführt und mit der Decke verschraubt. Anschliessend werden die Ausleger 300 auf passender Höhe in die Rohrteile 202 der Deckenstützen 200 eingesetzt und die Kabelbahnen 100 darauf aufgesetzt.

In Figur 1 ist zudem gezeigt, dass entlang eines Verkehrswegs oft Höhenunterschiede zu überbrücken sind. Dabei werden aufeinanderfolgende Kabelbahnen 100 auf unterschiedlichen Höhen montiert, wodurch die in die Kabelbahnen 100 eingelegten Kabel 9 gegebenenfalls ungeschützt vertikal von einer ersten zu einer zweiten Kabelbahn 100 verlaufen.

Aus der EP 0 355081 B1 ist ferner ein Kabelkanal bekannt, der eine Gitterstruktur aufweist.

Diese bekannten Installationsvorrichtungen weisen verschiedene Nachteile auf. Für die Installation der Vorrichtungen muss innerhalb eines Gebäudes genügend Raum zur Verfügung gestellt werden. Die Installationsvorrichtungen nehmen relativ viel Raum in Anspruch und hinterlassen ein unvorteilhaftes ästhetisches Erscheinungsbild. Zudem gestaltet sich die Installation dieser Installationsvorrichtungen relativ aufwändig. Zur Installation der Kabelkanäle sind Tragvorrichtung erforderlich, die typischerweise in grosser Raumhöhe installiert werden, weshalb Leitern oder Gestelle benötigt werden. Insbesondere auch bei Änderungen und Erweiterungen der Installation oder bei Wartungsarbeiten, zum Zweck der Inspektion, Installation oder Entnahme von Leitungen, ergibt sich wiederum ein relativ hoher Aufwand. Die Tragvorrichtungen und die Kabelkanäle müssen langfristig relativ hohen Belastungen standhalten, weshalb Materialien mit hoher Güte und Festigkeit und somit auch entsprechend hohen Kosten eingesetzt werden. Typischerweise werden verzinkte Metalle verwendet, welche eine hohe Festigkeit und eine hohe Korrosionsbeständigkeit aufweisen.

Der vorliegenden Erfindung liegt daher die Aufgabe zugrunde, eine Installationsvorrichtung zu schaffen, die nicht mit diesen Nachteilen behaftet ist.

Insbesondere ist eine kostengünstige und mit geringem Aufwand montierbare Installationsvorrichtung zu schaffen, welche es erlaubt, Leitungen, insbesondere Kabel, mit minimalem Raumbedarf in Gebäuden zu verlegen.

Die Leitungen sollen dabei gut geschützt sowie gut belüftet und gekühlt werden. Wartungsarbeiten und spätere Installationen sollen mit geringem Aufwand rasch durchführbar sein. Aufgrund der relativ hohen und weiter steigenden Transportkosten sollen erfindungsgemässe Installationsvorrichtungen auch in hoher Dichte verpackt, gelagert und transportiert werden können.

Diese Aufgabe wird mit einer Installationsvorrichtung gelöst, welche die in Anspruch 1 angegebenen Merkmale aufweist. Vorteilhafte Ausgestaltungen der Erfindung sind in weiteren Ansprüchen angegeben.

Die Installationsvorrichtung weist eine Gitterstruktur auf, welche dem Tragen von zu installierenden Leitungen, insbesondere Kabel, dient.

Erfindungsgemäss sind wenigstens zwei Montageprofile vorgesehen, welche ein mittels Befestigungselementen am Gebäudeboden befestigtes Mittelteil aufweisen, an dessen Seiten gegeneinander geneigte Seitenteile vorgesehen sind, zwischen denen die Gitterstruktur gehalten ist, die ein der Lagerung der Kabel dienendes Mittelstück und beidseits nach unten geneigte und auf dem Gebäudeboden abgestützte Seitenstücke aufweist. Ferner ist eine die Gitterstruktur gegen mechanische Einwirkungen schützende Abdeckung vorgesehen, die ein trittfestes Mittelelement und zwei Seitenelemente aufweist, die mit den Seitenteilen der Montageprofile verbunden sind.

Die Montageprofile, die dem Halten wenigstens einer oder zwei aneinander anschliessender Gitterstrukturen und wenigstens einer oder zwei aneinander anschliessender Abdeckungen dienen, können einstückig gefertigt sein oder aus zwei zumindest annähernd L-förmigen Profilelementen bestehen, die gestapelt und daher raumsparend gelagert und transportiert werden können. Vorzugsweise werden identische Profilelemente verwendet, die kostengünstig produziert werden können.

Die Mittelteile der L-förmigen Profilelemente weisen Montageöffnungen auf, die sich vorzugsweise senkrecht zu den Seitenelementen erstrecken und durch die hindurch eine Montageschraube oder ein Segmentanker in den Gebäudeboden eingeführt werden kann. Vorzugsweise weisen die Mittelteile der beiden Profilelemente ferner sich senkrecht zu den Seitenelementen erstreckende Einformungen auf, die bei der Installation des Montageprofils übereinander liegen und die beiden L-förmigen Profilelemente in einer senkrechten Ausrichtung verschiebbar zueinander halten.

Die Seitenteile der Montageprofile weisen vorzugsweise wenigstens zwei Montageöffnungen auf, die der Aufnahme von Verbindungsschrauben dienen, von denen die erste Verbindungsschraube der Befestigung einer ersten Abdeckung und die zweite Verbindungsschraube der Befestigung einer daran anschliessenden zweiten Abdeckung dient.

Die Montageöffnungen in den Seitenteilen der Montageprofile weisen vorzugsweise die Form eines Schlüssellochs auf. Die runde Öffnung des Schlüssellochs dient dabei der Durchführung des Kopfs der Verbindungsschraube, und in den verjüngten Teil des Schlüssellochs, der dem Gebäudeboden zugewandt ist, kann in der Folge der Schaft der Verbindungsschraube eingeführt werden. Auf diese Weise kann die Abdeckung problemlos von oben auf das Montageprofil aufgesetzt werden, wobei der Kopf der Verbindungsschraube in die Kreisöffnung des Schlüssellochs eintreten kann und der Schaft automatisch in den verjüngten Teil des Schlüssellochs eingeführt wird. Anschliessend wird je eine mit der zugehörigen Verbindungsschraube verbundene Schraubenmutter, die an den Aussenseiten der Seitenelemente der Abdeckung anliegt und frei zugänglich ist, festgezogen. Damit dies leicht vollzogen werden kann, wird die Verbindungsschraube vorzugsweise verdrehsicher gehalten. Dazu kann der Kopf der Verbindungsschraube kantig ausgebildet und in die Seitenelemente eingesenkt sein.

Die Seitenelemente der Abdeckung weisen vorzugsweise horizontal ausgerichtete Längsschlitze auf, in denen der Schaft der zugeordneten Verbindungsschraube gehalten ist. Nach dem Einsetzen der Verbindungsschrauben können die gehaltenen Abdeckungen gegeneinander verschoben werden, bis sie stirnseitig aneinander anliegen.

Die Abdeckungen dienen insbesondere dem Schutz der installierten Kabel gegen mechanische Einwirkungen. Dabei soll die Abdeckung nicht beschädigt werden, falls sie mit dem Gewicht einer Person belastet wird. Um einer Abdeckung, die nur eine geringe Materialdicke aufweisen soll, die notwendige Festigkeit zu verleihen, werden vorzugsweise Einformungen darin vorgesehen, die z.B. quer über das Mittelelement und weiter über beide Seitenelemente verlaufen. Durch die Einformungen bzw. Sicken erhalten die Abdeckungen eine hohe Biegesteifigkeit, weshalb trotz der geringen Materialdicke auch bei Einwirkung hoher Lasten keine wesentlichen Verformungen auftreten.

Um bei Belastung eine Deformation der Seitenelemente der Abdeckung und der Seitenteile des Montageprofils zu vermeiden, wird ferner vorgesehen, dass diese Elemente gegenüber dem Mittelteil des Montageprofils einen Winkel einschliessen, der nahe bei 90° liegt. Damit die Abdeckungen weiterhin stapelbar sind, wird vorzugsweise vorgesehen, dass dieser Winkel etwas unterhalb von 90°, zum Beispiel in einem Bereich von 60° bis 85°, liegt. In einem Bereich nahe 80° werden eine sehr gute Belastbarkeit und gleichzeitig eine sehr gute Stapelbarkeit erzielt.

Die erfindungsgemässe Installationsvorrichtung kann auch vorteilhaft in den Gebäudeboden integriert werden. Dabei wird eine an den Querschnitt der Installationsvorrichtung angepasste Ausnehmung im Gebäudeboden derart vorgesehen, dass die Oberseite der Abdeckung der installierten Installationsvorrichtung auf gleicher Höhe wie die Oberseite des Gebäudebodens liegt. Auf diese Weise gelingt es, Raum zu sparen und Hindernisse im Gebäude zu vermeiden. Dabei können Verkehrswege bzw. innerhalb eines Gebäudes verlaufende Ausnehmungen gemäss der aktuellen Planung vorgesehen werden. Bei der Planung des Gebäudes werden vorzugsweise jedoch auch Ausnehmungen für Verkehrswege vorgesehen, die möglicherweise in Zukunft von Interesse sein können. Z.B. werden Ausnehmungen vorgesehen, in die ein angepasstes Füllelement eingesetzt wird, dass entnommen wird, sobald der entsprechende Verkehrsweg realisiert werden soll. Auf diese Weise kann ein Gebäude für beliebige spätere Nutzungen vorbereitet werden.

Die installierten Leitungen werden auf der Gitterstruktur abgelegt, welche die Luftzirkulation und somit die Kühlung und Entlüftung der Kabel gewährleistet. Damit die Kabel auf der Gitterstruktur gehalten sind, werden vorzugsweise Endstücke einzelner Querstege nach oben gebogen. Z.B. werden die Endstücke aufeinanderfolgender Querstege alternierend nach oben und nach unten gebogen. Durch die nach unten gebogenen Endstücke der Querstege wird die Gitterstruktur vom Gebäudeboden beabstandet gehalten, so dass die Kabel nicht mit den Gebäudeboden oder darauf auftretender Feuchtigkeit in Berührung gelangt. Damit die Gitterstrukturen gestapelt werden können, werden die Endstücke nicht ganz um 90°, vorzugsweise in einem Winkel von 60° bis 85° nach unten gebogen, so dass eine nach unten geöffnete V-Form resultiert.

Die einander zugewandten Stirnseiten benachbarter Abdeckungen werden vorzugsweise mit einem gemeinsam genutzten Abschlusselement versehen, welches die Stoßstelle abdichtet und das Eindringen von Staub und Flüssigkeit verhindert. Dazu weist das Abschlusselement vorzugsweise ein H-Profil mit einander gegenüberliegenden Aufnahmenuten auf, in die die Stirnseiten der benachbarten Abdeckungen eingefügt werden können.

Ferner können die Zugänge der Installationsvorrichtung durch je ein Abschlusselement abgeschlossen sein, dessen Fläche etwa dem Querschnitt der Installationsvorrichtung entspricht. Dieses Abschlusselement ist mit Öffnungen versehen, die entweder permanent vorgesehen sind oder aus dem Abschlusselement freigelegt werden können. Beispielsweise werden geschwächte Zonen vorgesehen, die wahlweise aufgebrochen werden können, um eine passende Öffnung freizulegen. Ein derartig gestaltetes Abschlusselement kann daher sowohl für die Abdichtung der Stoß Stellen, als auch als Endstück der Installationsvorrichtung verwendet werden.

Die vorzugsweise verzinkte und rostfreie Gitterstruktur ist gegenüber der Abdeckung vorzugsweise elektrisch isoliert. Vorzugsweise wird die Gitterstruktur mit einem Kunststoff, zum Beispiel Polyethylen, beschichtet und auf L-förmige Isolationsprofile oder auf die mit Kunststoff beschichteten Montageprofile abgestützt.

In vorzugsweisen Ausgestaltungen werden auch die Abdeckungen mit einer Schutzschicht und/oder einer Isolationsschicht beschichtet.

Die erfindungsgemässe Installationsvorrichtung dient insbesondere der Verbindung elektrischer Anlagen, die zum Beispiel in verschiedenen Räumen eines Gebäudes installiert werden. Zur Realisierung entsprechender Verkehrswege können Abdeckungen und Gitterstrukturen vorgesehen werden, welche einen Winkel oder ein Kreissegment bilden. Auf diese Weise kann der Anwender Verkehrswege nach seinen individuellen Bedürfnissen gestalten.

Die erfindungsgemässe Installationsvorrichtung kann kostengünstig aus verschiedenen Materialien gefertigt werden. Die Montageprofile bzw. die L-förmigen Profilelemente und auch die Abdeckungen können aus einem Flachstahl oder auch aus Kunststoff gefertigt werden.

Nachfolgend wird die Erfindung anhand von Zeichnungen z.B. näher erläutert. Dabei zeigt:
- Fig. 1: die eingangs beschriebene bekannte Installationsvorrichtung mit zwei auf unterschiedlicher Höhe montierten Kabelbahnen 100A, 100B;
- Fig. 2: einen Schnitt durch eine erfindungsgemässe Installationsvorrichtung 1, die eine aus Querstegen 125 und Längsstegen 126 bestehende Gitterstruktur 12 sowie eine Abdeckung 13 aufweist, die mittels Montageprofilen 11 gehalten wird, die vorzugsweise anhand je einer Montageschraube 81 mit dem Boden eines Gebäudes verbunden sind;
- Fig. 3: das vorzugsweise aus zwei stapelbaren, zumindest annähernd L-förmigen Profilelementen 11A, 11B bestehende Montageprofil 11 von Figur 2;
- Fig. 4: das anhand der Montageschraube 81 mit dem Gebäudeboden verbundene Montageprofil 11, in das die Gitterstruktur 12 eingesetzt, geklemmt und anschliessend durch die Abdeckung 13 abgedeckt wird;
- Fig. 5: die Installationsvorrichtung 1 von Figur 4 in einer Schnittdarstellung von der Seite gesehen;
- Fig. 6: die Installationsvorrichtung 1 von Figur 4 mit der vollständig gezeigten Abdeckung 13 während des Installationsvorganges;
- Fig. 7: die Installationsvorrichtung 1 von Figur 4 mit der vollständig gezeigten Abdeckung 13 nach Abschluss der Installation;
- Fig. 8: die in Figur 2 gezeigte Installationsvorrichtung 1, die innerhalb einer Ausnehmung 51 im Gebäudeboden 5 installiert ist, aus der Füllelemente 500 entfernt wurden;
- Fig. 9: eine montierte Installationsvorrichtung 1 welche Kabel 9 zu einer elektrischen Anlage 10 führt; und
- Fig. 10: zeigt ein vollflächiges Abschlusselement 60, welches vorteilhaft als Abschluss an den beiden Enden der Installationsvorrichtung 1 verwendet werden kann.

Figur 1 zeigt die eingangs beschriebene Installationsvorrichtung mit zwei mittels Deckenstützen 2A, 2B und Auslegern 3A, 3B auf unterschiedlichen Höhen installierten Kabelbahnen 1A, 1B.

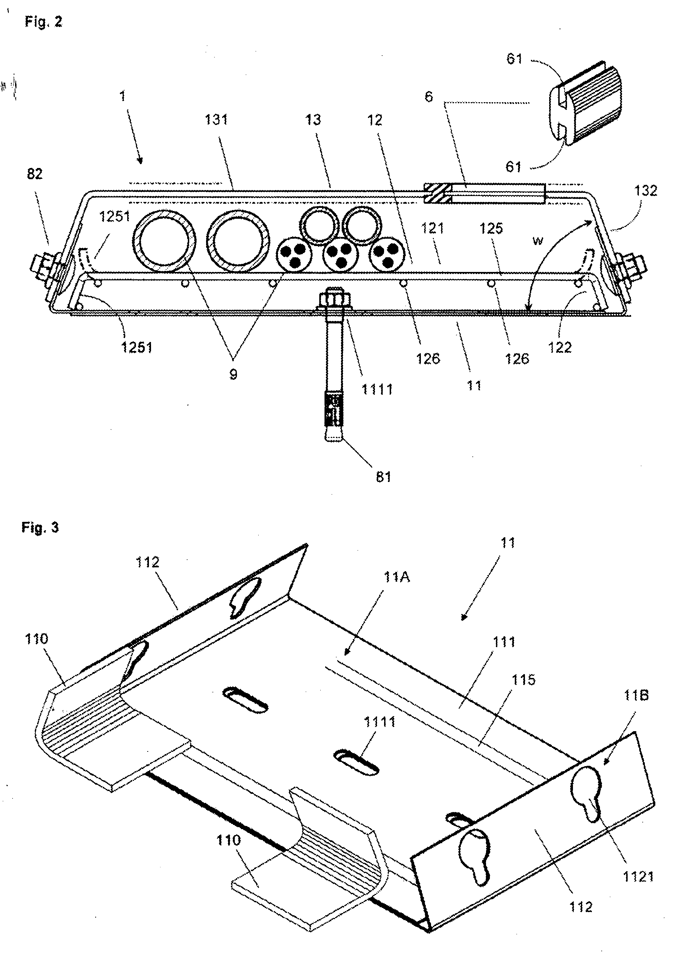

Figur 2 zeigt einen Schnitt durch eine erfindungsgemässe Installationsvorrichtung 1. Die Installationsvorrichtung 1 umfasst wenigstens zwei Montageprofile 11, welche voneinander beabstandet anhand je einer Montageschraube 81 am Boden eines Gebäudes installiert sind. Die Montageprofile 11 umfassen ein mit Längsöffnungen 1111 versehenes Mittelteil 111, an dessen Seiten gegeneinander geneigte Seitenteile 112 vorgesehen sind, zwischen denen eine Gitterstruktur 12 gehalten ist. Die Gitterstruktur 12, die aus Querstegen 125 und Längsstegen 126 besteht, weist ein der Lagerung von Leitungen, insbesondere Kabel 9, dienendes Mittelstück 121 und beidseits nach unten geneigte und auf dem Gebäudeboden 5 abgestützte Seitenstücke 122 auf. Auf die Montageprofile 11 ist eine Abdeckung 13 aufgesetzt, welche die Gitterstruktur 12 und die installierten Kabel 9 u.a. gegen mechanische Einwirkungen schützt und dazu ein trittfestes Mittelelement 131 und zwei Seitenelemente 132 aufweist, die anhand von Verbindungsschrauben 82 mit den Seitenteilen 112 der Montageprofile 11 verbunden sind.

Aus Figur 2 ist ersichtlich, dass die Kabel 9 durch die trittfeste Abdeckung 13 gut geschützt und durch die Gitterstruktur 12 vom Gebäudeboden beabstandet gelagert ist. Dadurch wird vermieden, dass Feuchtigkeit oder Wasser, das sich am Gebäudeboden sammelt, in Kontakt mit den Kabel 9 gelangen kann. Weiterhin erlaubt die Gitterstruktur 12 die Zirkulation von Luft, die die Kabel 9 belüftet und kühlt. In der gezeigten vorzugsweisen Ausgestaltung der Gitterstruktur 12 werden die Kabel 9 durch nach oben gebogene Endstücke 1251 einzelner Querstege 125 seitlich gehalten. Kabel 9 können auch mittels Kabelbindern mit der Gitterstruktur 12 verbunden werden.

Es ist ersichtlich, dass trotz der optimalen Lagerung der Kabel 9 ein relativ grosser Querschnitt für die Installation derselben frei gehalten wird. Anhand der erfindungsgemässen Installationsvorrichtung 1 gelingt es somit, den zur Verfügung stehenden Raum optimal zu nutzen.

Die Seitenstücke 122 der Gitterstruktur 12 und die Seitenelemente 132 der Abdeckung 13 schliessen zum Gebäude einen Winkel w von etwa 80° ein bzw. sind gegenüber dem Mittelstück 121 der Gitterstruktur 12 und dem Mittelelement 131 der Abdeckung 13 etwa um 100° geneigt. Die Gitterstruktur 12 und die Abdeckung 13 weisen daher eine erweiterte V-Form auf, welche es erlaubt, Gitterstrukturen 12 bzw. Abdeckungen 13 raumsparend zu stapeln und zu transportieren. Gleichzeitig können hohe Kräfte, die senkrecht auf die Seitenelemente 132 der Abdeckung 13 einwirken, aufgefangen werden, ohne dass Informationen der Abdeckung auftreten.

Auf die Stirnseite der gezeigten Abdeckung 13 ist ein Abschlusselement 6 aufgesetzt, welches die Stoßstelle zwischen zwei Abdeckungen 13 abdichten und das Eindringen von Staub und Flüssigkeit verhindern kann. Dazu weist das Abschlusselement vorzugsweise ein H-Profil mit einander gegenüberliegenden Aufnahmenuten 61 auf, in die die Stirnseiten der benachbarten Abdeckungen eingefügt werden können. Vorzugsweise weist das Abschlusselement 6 eine abgerundete Aussenform auf, welche kein Hindernis bildet.

Figur 3 zeigt das Montageprofil 11 von Figur 2, das in dieser Ausgestaltung aus zwei stapelbaren, zumindest annähernd L-förmigen Profilelementen 11A, 11B besteht, deren Mittelteile 111 derart übereinandergelegt sind, dass sich drei Montageöffnungen 1111, die in der Form von Längsschlitzen vorliegen, überdecken. Nachdem die Montageschraube 81, gegebenenfalls ein Segmentanker, durch zwei zueinander korrespondierende Montageöffnungen 1111 hindurch geführt ist, können die beiden Profilelemente 11A, 11B noch gegeneinander verschoben und erst anschliessend durch Festziehen der Montageschraube 81 fixiert werden. Z.B. werden die Profilelemente 11A, 11B so weit gegeneinander verschoben, bis die dazwischen liegende Gitterstruktur 12 gehalten bzw. festgeklemmt ist. Damit die beiden Profilelemente 11A, 11B senkrecht zueinander ausgerichtet gehalten sind, weisen die Mittelteile 111 zueinander korrespondierende Einformungen auf, die senkrecht zu den Seitenteilen 112 verlaufen.

Die Seitenteile 112 des Montageprofils 11 sind je mit zwei Öffnungen 1121 versehen, welche die Form eines Schlüssellochs aufweisen. Der Kopf einer Verbindungsschraube 82 kann daher problemlos in eine Öffnung 1121 eingeführt werden, so dass der nach unten verjüngte Teil der Öffnung 1121 den Schaft der verdrehsicheren Verbindungsschraube 82 aufnehmen und deren Kopf halten kann. In der Folge kann die an der Aussenseite der Abdeckung 13 anliegende Schraubenmutter angezogen werden, um die Verbindung zwischen dem Montageprofil 11 und der Abdeckung 13 zu sichern und die Gitterstruktur 12 fest einzuschliessen.

Figur 3 zeigt ferner, dass in die Montageprofile 11 vorzugsweise Isolationsprofile 110 aus Kunststoff eingesetzt werden, auf die die Gitterstruktur 12 aufgesetzt werden kann, so dass jede Gitterstruktur 12 gegenüber dem Montageprofil 11 und der Abdeckung 13 elektrisch isoliert ist. Die Isolationsprofile 110 sind vorzugsweise U- oder L-förmig ausgestaltet und aus Kunststoff gefertigt.

Die Gitterstruktur ist vorzugsweise aus verzinkten und rostfreien Metallstäben gefertigt und mit einem Kunststoff, zum Beispiel Polyethylen, beschichtet. Dadurch wird werden die installierten Leitungen und Kabel 9 gegenüber der Installationsvorrichtung 1 vollständig isoliert.

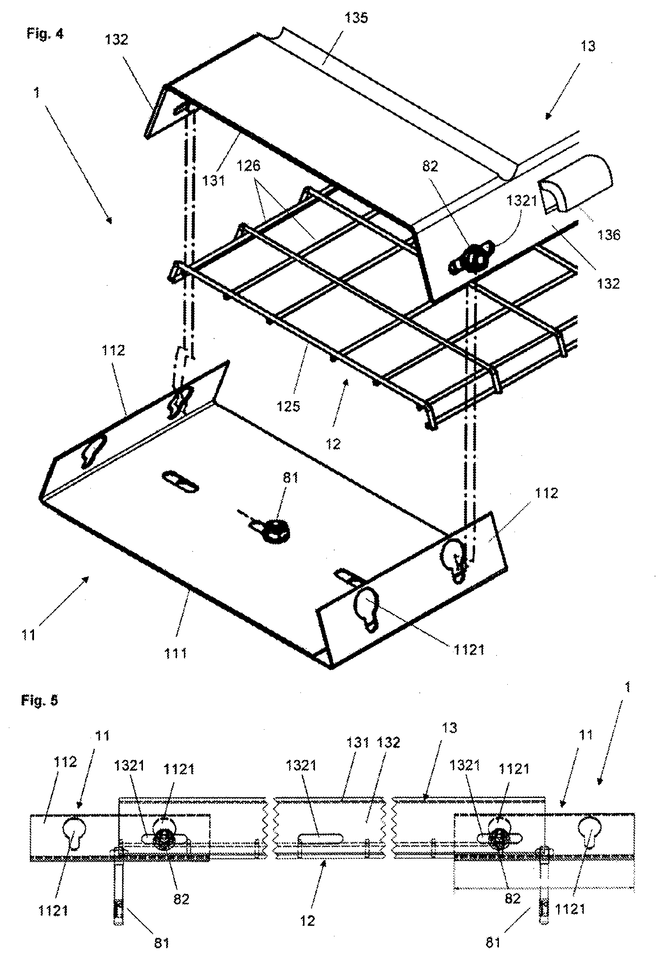

Figur 4 zeigt das anhand der Montageschraube 81 mit dem Gebäudeboden verbundene Montageprofil 11, in das die Gitterstruktur 12 eingesetzt und anschliessend durch die Abdeckung 13 abgedeckt wird. Es ist ersichtlich, dass die Gitterstruktur 12 eine relativ geringe Bauhöhe aufweisen kann, so dass zwischen dem Mittelstück der Gitterstruktur 12 und dem Gebäudeboden nur wenig Raum eingeschlossen wird, welche jedoch genügt, um den erforderlichen Abstand zum Gebäudeboden und die gewünschte Luftzirkulation sicherzustellen. Ferner ist gezeigt, dass die Seitenelemente 132 der Abdeckung 13 der Aufnahme der Verbindungsschraube 82 dienende Öffnungen 1321 aufweisen, die sich längs den Seitenelemente 132 über etwa eine Länge erstrecken, die etwa dem fünffachen des Durchmessers des Schaftes der Verbindungsschraube 82 entspricht. Dies erlaubt es, zwei anhand des Montageprofils 11 montierte Abdeckungen 13 gegeneinander zu verschieben, bis sie stirnseitig dicht aneinander liegen.

In Figur 4 ist ferner gezeigt, dass die Abdeckung 13 mit wenigstens einer quer verlaufenden Sicke 135 versehen ist, durch die die Abdeckung 13 verstärkt wird. Trotz geringer Materialdicke der Abdeckung 13 weist diese in der Folge eine hohe Festigkeit auf.

Weiterhin ist die Abdeckung 13 mit Ventilationsöffnungen 136 versehen, durch die erwärmte Luft aus der Installationsvorrichtung 1 entweichen kann. Damit vermieden wird, dass Schmutz in die Installationsvorrichtung 1 eintreten kann, werden die Ventilationsöffnungen 136 vorzugsweise in den Seitenelementen 132 vorgesehen. Vorzugsweise werden die Ventilationsöffnungen 136 gefertigt, indem ein U-förmiger Schnitt in das Seitenelement 132 eingefügt und das freigelegte Element 137 nach aussen gebogen wird, so dass es die Ventilationsöffnungen 136 abschirmt.

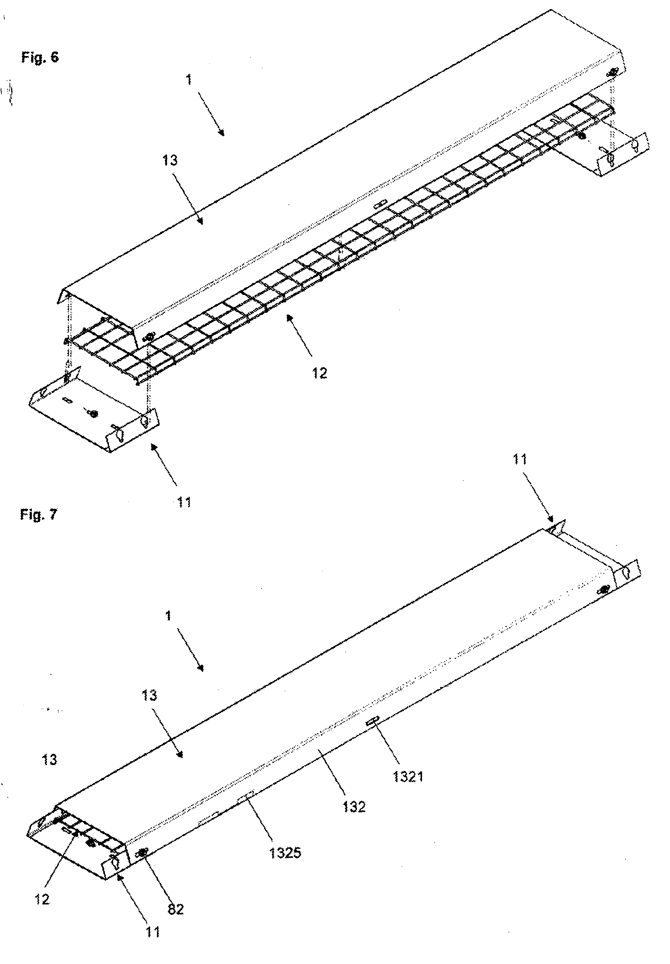

In Figur 5 ist gezeigt, dass die Seitenelemente 132 der Abdeckung 13 normalerweise derart montiert werden, dass zwischen dem Gebäudeboden und dem unteren Rand der Seitenelemente 132 ein Luftspalt verbleibt. Dadurch wird gewährleistet, dass Kühlluft in die Installationsvorrichtung 1 eintreten und die installierten Kabel 9 kühlen kann. Sofern mit einer hohen mechanischen Belastung zu rechnen ist, wird der untere Rand der Seitenelemente 132 am Gebäudeboden abgestützt und vorzugsweise mit Ausnehmungen 1325 versehen, durch die Kühlluft in die Installationsvorrichtung 1 eindringen kann (siehe Figur 7).

Figur 6 zeigt die Installationsvorrichtung 1 von Figur 4 während des Installationsvorgangs. Dabei werden zuerst die Montageprofile 11 montiert, die vor dem Aufsetzen der Abdeckung 13 noch justiert werden können. Die Gitterstruktur 12 wird als Lehre in die Montageprofile 11 eingesetzt, wonach diese justiert und durch Festziehen der Montageschrauben 81 fixiert werden. In der Folge wird die Abdeckung 13 mit den bereits eingesetzten Verbindungsschrauben 82 auf die Montageprofile 11 aufgesetzt und durch Festziehen der mit den Verbindungsschrauben 82 verbundenen Schraubenmuttern fixiert.

In Figur 7 ist gezeigt, dass nach dem Aufsetzen der Abdeckung 13 jeweils eine Hälfte der Montageprofile 11 für die Aufnahme einer benachbarten Abdeckung 13 frei gehalten ist.

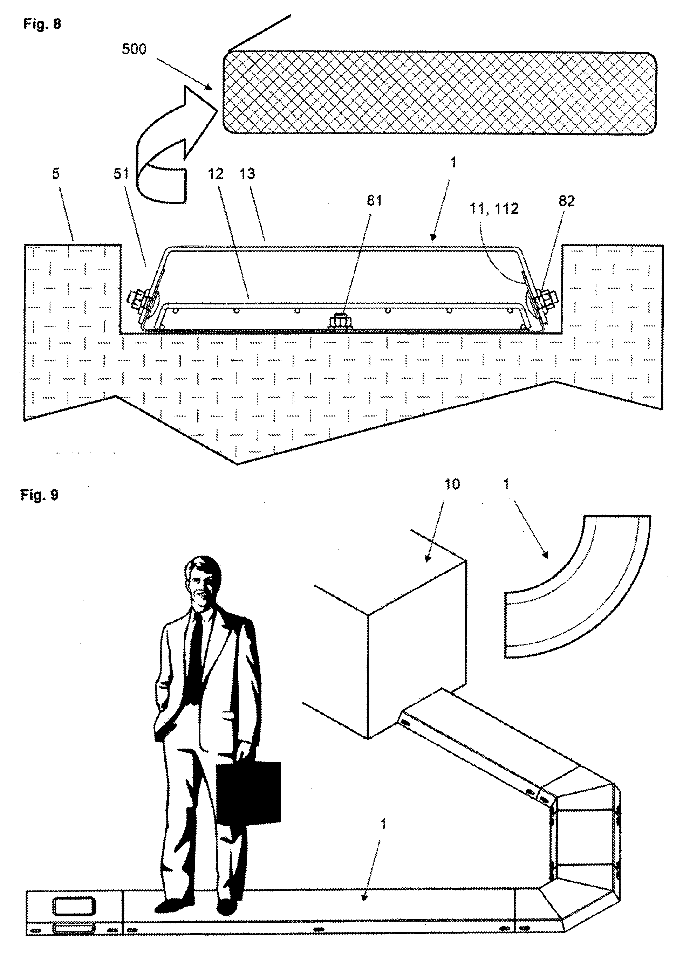

Figur 8 zeigt die Installationsvorrichtung 1 von Figur 2, die innerhalb einer Ausnehmung 51 im Gebäudeboden 5 derart installiert ist, dass die Oberseite der Abdeckung 13 auf derselben Höhe liegt, wie die Oberfläche des Gebäudebodens 5. Der Gebäudeboden 5 kann dabei für die geplante Installation und zukünftige Erweiterungen mit den entsprechenden Ausnehmungen 51 versehen werden, die mit Füllelementen 500 abgeschlossen werden, die bei Bedarf entfernt werden. Auf diese Weise können Gebäude für beliebige spätere Nutzungen vorbereitet werden. Der Gebäudeboden 5 mit den Füllelementen 500 kann dabei in konventioneller Weise mit einem Bodenbelag versehen werden, der bei Bedarf lokal entfernt wird.

Figur 9 illustriert, dass die in einem Gebäude installierte Installationsvorrichtung 1, welche elektrische Anlagen 10 miteinander verbindet, bei der Nutzung der Räumlichkeiten kein wesentliches Hindernis darstellt. Dabei wird die Installationsvorrichtung 1 mit beliebigen Formen, z.B. Winkelelementen oder Bogenelementen, in Zonen installiert, die vorzugsweise ausserhalb des Gangbereichs liegen. Da die Installationsvorrichtung 1 trittfest ausgestaltet ist und nur eine geringe Bauhöhe aufweist, können auch Traversen durch einen Gangbereich vorgesehen werden. Damit der Gang weiter befahrbar ist können flache Rampen vorgesehen werden.

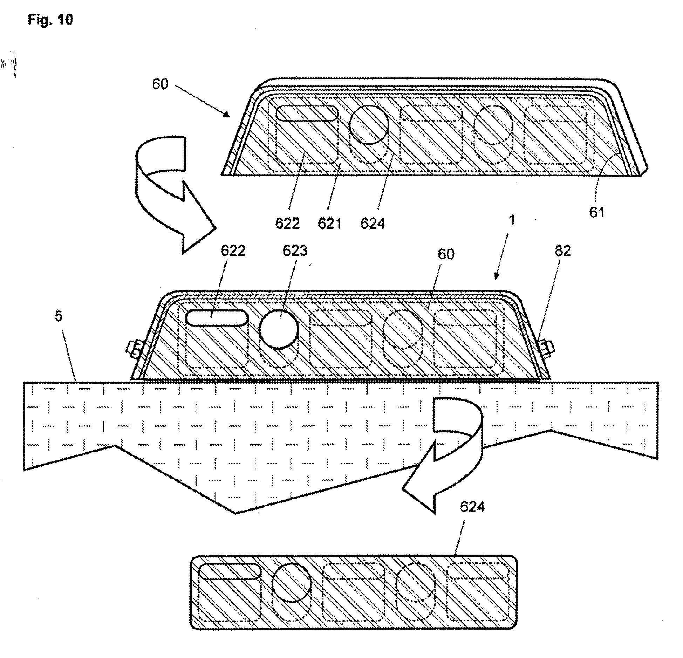

Figur 10 zeigt ein vollflächiges Abschlusselement 60, welches vorteilhaft als Abschluss oder Abdeckung an den beiden Enden der Installationsvorrichtung 1 verwendet werden kann. Das Abschlusselement 60, dessen Fläche etwa dem Querschnitt der Installationsvorrichtung 1 entspricht, weist Öffnungen 621, 622 auf, die permanent vorgesehen sind, oder durch Aufbrechen geschwächter Zonen bzw. Linien wahlweise freigelegt werden. Das Abschlusselement 60 ist auf einer oder beiden Seiten mit einer Aufnahmenut 61 versehen, in die die Stirnseite der Abdeckung 13 eingefügt worden ist. In dieser Ausgestaltung kann das Aufnahmeelement 60 auch als Verbindungsstück oder Dichtungselement zwischen zwei benachbarten Abdeckungen 13 verwendet werden. Dabei können einzelne Öffnungen 622, 623 oder eine maximale Öffnung durch Entnahme eines Elementteil 624 frei gelegt werden, welches etwa dem Teil des Querschnitts der Installationsvorrichtung 1 entspricht, welche für die Führung der Leitungen benötigt wird. Durch die passend gewählten Öffnungen 622, 623, 624 können die Leitungen 9 innerhalb der Installationsvorrichtung 1 oder von dieser weggeführt werden.

## Patentansprüche

1. Installationsvorrichtung (1) mit einer aus Querstegen (125) und Längsstegen (126) bestehenden Gitterstruktur (12), welche dem Tragen von zu installierenden Leitungen, insbesondere Kabel (9), dient, **dadurch gekennzeichnet, dass** wenigstens zwei Montageprofile (11) vorgesehen sind, welche ein anhand von Befestigungselementen (81) am Gebäudeboden (5) befestigtes Mittelteil (111) aufweisen, an dessen Seiten gegeneinander geneigte Seitenteile (112) vorgesehen sind, zwischen denen die Gitterstruktur (12) gehalten ist, die ein der Lagerung der Leitungen (9) dienendes Mittelstück (121) und beidseits nach unten geneigte und auf dem Gebäudeboden (5) abgestützte Seitenstücke (122) aufweist, und dass eine die Gitterstruktur (12) gegen mechanische Einwirkungen schützende Abdeckung (13) vorgesehen ist, die ein trittfestes Mittelelement (131) und zwei Seitenelemente (132) aufweist, die mit den Seitenteilen (112) der Montageprofile (11) verbunden sind.

2. Installationsvorrichtung (1) nach Anspruch 1, **dadurch gekennzeichnet, dass** die Montageprofile (11), die dem Halten der einen oder von zwei aneinander anschliessender Gitterstrukturen (12) sowie der einen oder von zwei aneinander anschliessenden Abdeckungen (13) dienen, einstückig gefertigt sind oder aus zwei stapelbaren zumindest annähernd L-förmigen Profilelementen (11A, 11B) bestehen, die vorzugsweise zueinander korrespondierende Einformungen aufweisen.

3. Installationsvorrichtung (1) nach Anspruch 1 oder 2, **dadurch gekennzeichnet, dass** die Mittelteile (111) der L-förmigen Profilelemente (11A, 11B) Montageöffnungen (1111) aufweisen, die sich vorzugsweise senkrecht zu den Seitenelementen (112) erstrecken und durch die hindurch eine Montageschraube oder ein Segmentanker (81) in den Gebäudeboden (5) eingeführt ist.

4. Installationsvorrichtung (1) nach Anspruch 1, 2 oder 3, **dadurch gekennzeichnet, dass** die Seitenteile (112) der Montageprofile (11) wenigstens zwei Montageöffnungen (1121) aufweisen, die der Aufnahme von Verbindungsschrauben (82) dienen, von denen die erste Verbindungsschraube (82) der Befestigung einer ersten Abdeckung (13) und die zweite Verbindungsschraube (82) der Befestigung einer daran anschliessenden zweiten Abdeckung (13) dient.

5. Installationsvorrichtung (1) nach Anspruch 4, **dadurch gekennzeichnet, dass** die Montageöffnungen (1121) die Form eines Schlüssellochs aufweisen, welches zur Aufnahme des Kopfs der Verbindungsschraube (82) geeignet ist, und dessen verjüngter Teil, welcher der Aufnahme des Schafts der Verbindungsschraube (82) dient, dem Gebäudeboden (5) zugewandt ist.

6. Installationsvorrichtung (1) nach einem der Ansprüche 1 - 5, **dadurch gekennzeichnet, dass** die Seitenelemente (132) der Abdeckung (13) horizontal ausgerichtete Längsschlitze (1321) aufweisen, in denen der Schaft der zugeordneten Verbindungsschraube (82) gehalten ist.

7. Installationsvorrichtung (1) nach einem der Ansprüche 1 - 6, **dadurch gekennzeichnet, dass** das Mittelelement (131) und/oder die Seitenelemente (132) der Abdeckung (13) mit verstärkenden Einformungen (135), wie Sicken, versehen ist, die vorzugsweise in einem rechten Winkel von einem zum anderen Seitenelement (132) verlaufen.

8. Installationsvorrichtung (1) nach einem der Ansprüche 1 - 7, **dadurch gekennzeichnet, dass** der Gebäudeboden (5) eine Ausnehmung (51) aufweist, in die keine oder die ganze Installationsvorrichtung derart eingesetzt ist, dass das Mittelelement (131) etwa in einer Ebene zur Oberfläche des Gebäudebodens (5) verläuft; wobei in ungenutzte Teile der Ausnehmung (51) vorzugsweise Füllelemente (500) eingesetzt sind.

9. Installationsvorrichtung (1) nach einem der Ansprüche 1 - 8, **dadurch gekennzeichnet, dass** die Endstücke (1251) einzelner Querstege (125) der Gitterstruktur (12) vorzugsweise alternierend nach oben und nach unten gebogen sind, um die eingelegten Leitungen (9) seitlich zu halten bzw. um die Gitterstruktur (12) abzustützen.

10. Installationsvorrichtung (1) einem der Ansprüche 1 - 9, **dadurch gekennzeichnet, dass** die gegeneinander geneigten Seitenelemente (132) der Abdeckung (13) und die daran anliegenden Seitenteile (112) des Montageprofils (11) mit dem Mittelteil (111) einen Winkel im Bereich von 60° - 85°, vorzugsweise einen Winkel von etwa 80° einschliessen und/oder dass die nach unten gebogenen Endstücke (1251) der Querstege (125) der Gitterstruktur (12) mit dem Gebäudeboden (5) einen Winkel im Bereich von 60° - 85°, vorzugsweise einen Winkel von etwa 80° einschliessen.

11. Installationsvorrichtung (1) nach einem der Ansprüche 1 - 10, **dadurch gekennzeichnet, dass** wenigstens eine der Gitterstrukturen (12) und die dazu korrespondierende Abdeckung (13) in einem Bogen mit einem Winkel im Bereich von 45° bis 90° verlaufen.

12. Installationsvorrichtung (1) nach einem der Ansprüche 1 - 11, **dadurch gekennzeichnet, dass** die Montageprofile (11) oder die L-förmigen Profilelemente (11A, 11B) aus einem Flachstahl gefertigt sind und dass die vorzugsweise der Entlüftung dienende Öffnungen (136) versehene Abdeckung (13) aus Metall oder aus Kunststoff gefertigt ist.

13. Installationsvorrichtung (1) nach einem der Ansprüche 1 - 12, **dadurch gekennzeichnet, dass** an der Stirnseite einer Abdeckung (13) ein aus Metall oder Kunststoff gefertigtes Abschlusselement (6; 60) vorgesehen ist, welches die Stossstelle zur Stirnseite der benachbarten Abdeckung (13) abdichtet oder welches die Installationsvorrichtung (1) abschliesst.

14. Installationsvorrichtung (1) nach einem der Ansprüche 1 - 13, **dadurch gekennzeichnet, dass** das Abschlusselement (6) ein streifenförmiges U- oder H-Profil ist, welches eine bzw. zwei je der Aufnahme der Stirnseite einer Abdeckung (13) dienende Aufnahmenuten (61) aufweist, oder dass das Abschlusselement (60) eine den Querschnitt der Installationsvorrichtung (1) abschließende Abdeckung bildet, welches auf einer oder beiden Seiten eine bzw. zwei je der Aufnahme der Stirnseite einer Abdeckung (13) dienende Aufnahmenuten (61) sowie permanente oder wahlweise freilegbare Öffnungen (621, 622, 623) aufweist.

15. Installationsvorrichtung (1) nach einem der Ansprüche 1 - 14, **dadurch gekennzeichnet, dass** die mit Kunststoff beschichtete Gitterstruktur (12) gegenüber der Abdeckung (13) elektrisch isoliert und vorzugsweise auf L-förmige Isolationsprofile (110) oder auf die mit Kunststoff beschichteten Montageprofile (11) abgestützt ist.

## Claims

1. Installation device (1) with a grid structure (12) comprising transversal bars (125) and longitudinal bars (126), which serves for supporting lines, particularly cables (9), which need to be installed, **characterised in that** at least two mounting profiles (11) are provided that comprise a central part (111), which is mounted on the building floor (5) by means of fastening elements (81) and which is provided at its sides with side parts (112) that are inclined towards one another and between which the grid structure (12) is held that comprises a central member (121), which serves for supporting the lines (9) and which comprises on both sides side members (122) that are inclined downwards and that are seated on the building floor (5), and that a cover (13) is provided which protects the grid structure (12) against mechanical impacts and that comprises a step proof middle element (131) and two side elements (132), which are connected to the side parts (112) of the mounting profiles (11).

2. Installation device (1) according to claim 1, **characterised in that** the mounting profiles (11), which serve for holding the grid structure (12) or of two grid structures (12) that are adjoining one another as well as for holding the cover (13) or of two covers (13) that are adjoining one another, are made of one piece or consist of two at least approximately L-shaped profile elements (11A, 11B), which can be stapled and which preferably are provided with spherodizations corresponding to one another.

3. Installation device (1) according to claim 1 or 2, **characterised in that** the middle parts (111) of the L-shaped profile elements (11A, 11B) comprise mounting openings (1111), which preferably extend at a right angle to the side elements (112) and through which a mounting screw mounting screw or an anchor bolt (81) can be inserted into the building floor (5).

4. Installation device (1) according to claim 1, 2 or 3, **characterised in that** the side parts (112) of the mounting profiles (11) are provided with at least two mounting openings (1121), which serve for receiving connecting screws (82), of which the first connecting screw (82) serves for fastening a first cover (13) and the second connecting screw (82) serves for fastening a second cover (13) adjoining thereto.

5. Installation device (1) according to claim 4, **characterised in that** the mounting openings (1121) exhibit the form of a keyhole, which is suitable for receiving the head of the connecting screw (82) and whose narrow part, which serves for receiving the shaft of the connecting screw (82), is directed towards the building floor (5).

6. Installation device (1) according to one of the claims 1 - 5, **characterised in that** the side elements (132) of the cover (13) comprise horizontally aligned longitudinal slots (1321), in which the shaft of the related connecting screw (82) is held.

7. Installation device (1) according to one of the claims 1 - 6, **characterised in that** the middle element (131) and/or the side elements (132) of the cover (13) are provided with enforcing spherodizations (135), such as seams, which preferably extend at a right angle from one to the other side element (132).

8. Installation device (1) according to one of the claims 1 - 7, **characterised in that** the building floor (5) comprises a recess (51), in which none or the complete installation device is inserted in such a way that the middle element (131) extends at least approximately in a plane with the surface of the building floor (5); whereby fill elements (500) are preferably inserted into not utilised parts of the recess (51).

9. Installation device (1) according to one of the claims 1 - 8, **characterised in that** the end parts (1251) of the transversal bars (125) of the grid structure (12) are preferably bent alternatingly upwards and downwards in order to laterally hold the placed lines (9) or in order to support the grid structure (12).

10. Installation device (1) according to one of the claims 1 - 9, **characterised in that** the side elements (132) of the cover (13), which are inclined towards one another, and the side parts (112) of the mounting profile (11) adjoining thereto enclose together with the central part (111) an angle in the range of 60° - 85°, preferably an angle of approximately 80° and/or that the end parts (1251) of the transversal bars (125) of the grid structure (12), which are bent downwards, enclose together with the building floor (5) an angle in the range of 60° - 85°, preferably an angle of approximately 80°.

11. Installation device (1) according to one of the claims 1 - 10, **characterised in that** at least one of the grid structures (12) and the cover (13) corresponding thereto extend in a curve with an angle in the range of 45° to 90°.

12. Installation device (1) according to one of the claims 1 - 11, **characterised in that** the mounting profiles (11) or the L-shaped profile elements (11A, 11B) are made from a steel sheet and that the cover (13), which preferably comprises openings (136) serving for ventilation is made of metal or plastic.

13. Installation device (1) according to one of the claims 1 - 12, **characterised in that** a terminating element (6; 60) made of metal or plastic is provided at the front side of a cover (13), which seals the border line to the front side of the neighbouring cover (13) or which closes the installation device (1).

14. Installation device (1) according to one of the claims 1 - 13, **characterised in that** the terminating element (6) is a strip-shaped U- or H-profile, which is provided with one or two receiving grooves (61) serving each for receiving the front side of a cover (13), or that the terminating element (60) forms a cover that closes the cross-section of the installation device (1) and that comprises on one or both sides one respectively two receiving grooves (61) each serving for receiving the front side of a cover (13) as well as openings (621, 622, 623) which are permanently opened or can selectively be opened.

15. Installation device (1) according to one of the claims 1 - 14, **characterised in that** the grid structure (12), which is coated with plastic, is electrically insulated against the cover (13) and is seated preferably on L-shaped installation profiles (110) or on the mounting profiles (11) that are coated with plastic.

## Revendications

1. Dispositif d'installation (1) comprenant une structure grillagée (12) se composant de traverses transversales (125) et de traverses longitudinales (126), structure qui sert à porter des lignes à installer, en particulier des câbles (9), **caractérisé en ce qu'**il est prévu au moins deux profilés de montage qui présentent une partie médiane (111) fixée par des éléments de fixation (81) sur le sol du bâtiment (5), sur les faces de laquelle il est prévu des parties latérales inclinées l'une vers l'autre (112) entre lesquelles la structure grillagée (12) est maintenue, qui présente une pièce médiane (121) servant au logement des lignes (9) et de part et d'autre des pièces latérales (122) inclinées vers le bas et prenant appui sur le sol de bâtiment (5), en **en ce qu'**il est prévu un couvercle (13) protégeant la structure grillagée (12) contre des influences mécaniques, couvercle qui présente un élément médian (131) résistant aux piétinement et deux éléments latéraux (132) qui sont reliés aux parties latérales (112) des profilés de montage (11).

2. Dispositif d'installation (1) selon la revendication 1, **caractérisé en ce que** les profilés de montage (11) qui servent à maintenir une ou deux structures grillagées (12) attenantes ainsi qu'un ou deux couvercles (13) attenants, sont fabriqués d'un seul tenant ou se composent de deux éléments profilés (11A, 11B) approximativement en forme de L et empilables, qui présente de préférence des empreintes correspondantes entre elles.

3. Dispositif d'installation (1) selon la revendication 1 ou 2, **caractérisé en ce que** les parties médianes (111) des éléments profilés (11A, 11B) en forme de L présente des ouvertures de montage (1111) qui s'étendent de préférence perpendiculairement aux éléments latéraux (112) et à travers lesquels il est introduit une vis de montage ou un segment d'ancrage (81) dans le sol du bâtiment (5).

4. Dispositif d'installation (1) selon la revendication 1, **caractérisé en ce que** les parties latérales (112) des profilés de montage (11) présentent au moins deux ouvertures de montage (1121) qui servent au logement de vis de connexion (82) dont la première vis de connexion (82) sert à la fixation d'un premier couvercle (13) et la seconde vis de connexion (82) à la fixation d'un second couvercle (13) attenant.

5. Dispositif d'installation (1) selon la revendication 4, **caractérisé en ce que** les ouvertures de montage (1121) présentent la forme d'un trou de clés qui est approprié au logement de la tête de la vis de connexion (82) et dont la partie conique qui sert au logement de la tige de la vis de connexion (82) est tournée vers le sol (5) du bâtiment.

6. Dispositif d'installation (1) selon l'une des revendications 1 à 5, **caractérisé en ce que** les éléments latéraux (132) du couvercle (13) présentent des fentes longitudinales (1321) orientées horizontalement dans lesquelles est maintenue la tige de la vis de connexion (82) associée.

7. Dispositif d'installation (1) selon l'une des revendications 1 à 5, **caractérisé en ce que** l'élément médian (131) et/ou les éléments latéraux (132) du couvercle (13) est muni d'empreintes de renfort (135), tels que des moulures qui s'étendent de préférence en angle droit d'un élément latéral (132) à l'autre.

8. Dispositif d'installation (1) selon l'une des revendications 1 à 7, **caractérisé en ce que** le sol (5) du bâtiment présente un évidement (51) dans lequel aucun ou tout le dispositif d'installation est introduit de sorte que l'élément médian (13) s'étend sensiblement dans un plan par rapport à la surface du sol (5) du bâtiment, des éléments de remplissage (500) étant introduits de préférence dans des parties inutilisées de l'évidement (51).

9. Dispositif d'installation (1) selon l'une des revendications 1 à 8, **caractérisé en ce que** les pièces d'extrémité (1251) de chacune des traverses transversales (125) séparées de la structure grillagée (12) de préférence en alternance vers le haut et vers le bas pour maintenir latéralement les lignes introduites (9) latéralement respectivement pour soutenir la structure grillagée (12).

10. Dispositif d'installation (1) selon l'une des revendications 1 à 9, **caractérisé en ce que** les éléments latéraux (132) inclinés les uns vers les autres du couvercle (13) et les parties latérales (112) appliquées contre, du profilé de montage (11) forment avec la partie médiante (111) un angle compris entre 60° et 85°, de préférence un angle d'environ 80° et/ou **en ce que** les pièces d'extrémités (1251) coudées vers le bas, des traverses transversales (125) de la structure grillagée (12) forment avec le sol (5) du bâtiment un angle compris entre 60° et 85°, de préférence un angle d'environ 80°.

11. Dispositif d'installation (1) selon l'une des revendications 1 à 10, **caractérisé en ce qu'**au moins l'une des structures grillagées (12) et le couvercle (13) correspondant s'étendent en formant un arc avec un angle compris entre 45°et 90°.

12. Dispositif d'installation (1) selon l'une des revendications 1 à 11, **caractérisé en ce que** les profilés de montage (11) ou les éléments de profilé en forme de L (11A, 11B) sont fabriqués à part d'acier plat et **en ce que** le couvercle (13) muni de préférence d'ouverture (136) servant à l'aération est fabriqué en métal ou en matière plastique.

13. Dispositif d'installation (1), selon l'une des revendications 1 à 12, **caractérisé en ce que** sur la face frontale d'un couvercle (13), il est prévu un élément de fermeture (6 ; 60) fabriqué en métal ou en matière plastique, lequel rend étanche le point d'impact de la face frontale du couvercle voisin (13) ou lequel ferme le dispositif d'installation (1).

14. Dispositif d'installation (1) selon l'une des revendications 1 à 13, **caractérisé en ce que** l'élément de fermeture (6) est un profilé en forme de bande en U ou H qui présente une ou deux gorges de logement (61) servant chacune au logement de la face avant d'un couvercle (13) ou **en ce que** l'élément de fermeture (60) forme un couvercle fermant la section transversale du dispositif d'installation (1), élément qui présente sur une ou les deux faces une ou deux gorges de logement (61) servant au logement de la face frontale d'un couvercle (13), ainsi que des ouvertures permanentes ou au choix dégageables (621, 622, 623).

15. Dispositif d'installation (1) selon l'une des revendications 1 à 14, **caractérisé en ce que** la structure grillagée (12) recouverte de matière plastique est isolée électriquement par rapport au couvercle (13) et prend appui de préférence sur des profilés d'isolation en forme de L ou sur les profilés de montage (11) recouverts de matière plastique.
